# EUROPÄISCHE PATENTSCHRIFT

(11) **EP 3 906 764 B1**
(45) Veröffentlichungstag und Bekanntmachung des Hinweises auf die Patenterteilung: **25.01.2023**
(21) Anmeldenummer: 21157031.2
(22) Anmeldetag: 15.02.2021
(51) Int. Cl.: A01B 59/00, A01B 71/02

(54) **LANDWIRTSCHAFTLICHES ASSISTENZSYSTEM**
AGRICULTURAL ASSISTANCE SYSTEM
SYSTÈME D'ASSISTANCE AGRICOLE

(30) Priorität: 06.05.2020 DE 102020112299
(43) Veröffentlichungstag der Anmeldung: 10.11.2021
(73) Patentinhaber: CLAAS Tractor S.A.S., 78141 Vélizy-Villacoublay Cedex (FR)
(72) Erfinder: Ehlert, Christian, 33719 Bielefeld (DE); Wieckhorst, Jan Carsten, 29525 Uelzen Ortsteil Hanstedt 2 (DE); Birkmann, Christian, 33775 Versmold (DE); Meyer, Lennart, 52072 Aachen (DE)
(74) Vertreter: CLAAS Gruppe

(56) Entgegenhaltungen:
- EP-A1- 3 552 472
- EP-A1- 3 626 041
- EP-A2- 3 243 367
- EP-A2- 3 243 368
- DE-A1-102017 130 146

## Beschreibung

Die vorliegende Erfindung betrifft ein landwirtschaftliches Assistenzsystem gemäß dem Oberbegriff von Anspruch 1.

Der bekannte Stand der Technik (DE 10 2017 130 146 A1), von dem die Erfindung ausgeht, betrifft ein landwirtschaftliches Assistenzsystem gemäß dem Oberbegriff von Anspruch 1.

Anwendung findet das in Rede stehende Assistenzsystem bei der Ansteuerung einer Zugmaschine und/oder eines Anbaugeräts, die insbesondere ein landwirtschaftliches Gespann bilden. Die Zugmaschine ist hier und vorzugsweise ein Traktor. Das Anbaugerät kann an die Zugmaschine angekoppelt sein. Dabei kann ein und derselbe Traktor mit den unterschiedlichsten Anbaugeräten kombiniert werden. Bei solchen Anbaugeräten handelt es sich beispielsweise um Mähwerke, Ballenpressen, Schwader, Wender, Bodenbearbeitungsgeräte, Düngerstreuer oder dergleichen.

Für eine optimale Ansteuerung des landwirtschaftlichen Gespanns unter bestimmten Optimierungskriterien wird der Zugmaschine ein Fahrerassistenzsystem zugeordnet. Bei solchen Fahrerassistenzsystemen ist erkannt worden, dass für eine optimierte Ansteuerung des Gespanns die Kenntnis bestimmter Eigenschaften der Zugmaschine einerseits und des Anbaugeräts andererseits unverzichtbar ist.

Es sind Fahrerassistenzsysteme bekannt, bei denen Steuerparameter für die Zugmaschine und/oder für das Anbaugerät erzeugt werden, wobei das Fahrerassistenzsystem eine Ein-/Ausgabeeinheit für den Dialog mit dem Bediener aufweist. Die erzeugten Steuerparameter werden vorzugsweise an eine Maschinensteuerung der Zugmaschine und/oder an eine Gerätesteuerung des Anbaugeräts, sofern vorhanden, geleitet. Eine Änderung der Steuerparameter bewirkt dann eine entsprechende Änderung der Maschineneinstellungen und/oder Geräteeinstellungen. Die Änderung der Steuerparameter kann vollautomatisch oder über eine Bedienereingabe vorgesehen sein. Im letztgenannten Fall kann der Bediener beispielsweise über die Ein-/Ausgabeeinheit aufgefordert werden, entsprechende Eingaben vorzunehmen.

Es sind Fahrerassistenzsysteme bekannt, die eine regelbasierte Steuerung aufweisen. Solche regelbasierten Steuersysteme weisen einen generischen Regelinterpreter auf, der zur Abarbeitung der Regeln eines Regelwerks eingerichtet ist. Die Regeln gehen dabei vorzugsweise auf einfache "Wenn-Dann-Bedingungen" zurück. Zur Abarbeitung des Regelwerks werden dem Regelinterpreter Eingangsparameter zugeführt, auf die der Regelinterpreter die Regeln des Regelwerks anwendet. Das Ergebnis sind Ausgangsparameter, die sich aus den Eingangsparametern einerseits und dem Regelwerk andererseits ergeben. Die Regeln des Regelwerks sind von einem standardisierten Format, so dass gänzlich unbekannte Regeln von dem Regelinterpreter in reproduzierbarer Weise abgearbeitet werden können.

Dabei handelt es sich bei dem Regelinterpreter um eine generische Einheit, die unabhängig von der Ausgestaltung von Zugmaschine und Anbaugerät ausgestaltet ist. Das Regelwerk dagegen repräsentiert die zugmaschinenspezifischen und/oder anbaugerätespezifischen Eigenschaften.

Aus dem Stand der Technik ist bekannt, den Regelinterpreter auf Steuerungshardware des landwirtschaftlichen Gespanns oder auf gespannferner Steuerungshardware auszuführen.

Es ist auch bekannt, dass die Regelwerke von einem Regelgenerator zur Verfügung gestellt werden. Dieser kann dabei zumindest eine Datenbank umfassen.

Es ist dabei eine Herausforderung, dass regelmäßig Regelwerke und Regelinterpreter auf verschiedener Steuerungshardware angeordnet sind und miteinander koordiniert werden müssen. Dabei besteht jedoch das Problem, dass aufgrund von Speicherplatzrestriktionen und Zugriffsbeschränkungen auf proprietäre Regelwerke diese Koordination schnell an ihre Grenzen stößt.

Der Erfindung liegt das Problem zugrunde, das bekannte landwirtschaftliche Assistenzsystem derart auszugestalten und weiterzubilden, dass hinsichtlich der genannten Herausforderung eine weitere Optimierung erreicht wird.

Das obige Problem wird durch die Merkmale des kennzeichnenden Teils von Anspruch 1 gelöst.

Besonders bevorzugte Ausgestaltungen sind Gegenstand der Unteransprüche.

Wesentlich ist die grundsätzliche Überlegung, dass der Regelinterpreter bedarfsweise auf unterschiedlicher Steuerungshardware ausgeführt werden kann. Der Regelinterpreter kann also immer dort ausgeführt werden, wo die entsprechenden Regelwerke auch verfügbar sind. Mit Hilfe eines Koordinationsmoduls kann der jeweilige Ausführungsort des Regelinterpreters unabhängig von der Gesamtfunktion des Assistenzsystems sein. Der Regelgenerator und das Fahrerassistenzsystem werden also von dem Regelinterpreter entkoppelt, so dass sie unabhängig vom Ort und von Ortwechseln des Regelinterpreters funktionieren.

Im Einzelnen wird vorgeschlagen, dass das landwirtschaftliche Assistenzsystem eingerichtet ist, den Regelinterpreter bedarfsweise auf Steuerungshardware, die Teil der Zugmaschine und/oder des Anbaugeräts ist, und auf Steuerungshardware, die gespannfern angeordnet ist, auszuführen und dass das landwirtschaftliche Assistenzsystem hierfür ein Koordinationsmodul aufweist, das den Regelinterpreter unabhängig von dem Ausführungsort des Regelinterpreters mit dem Regelgenerator und dem Fahrerassistenzsystem koordiniert.

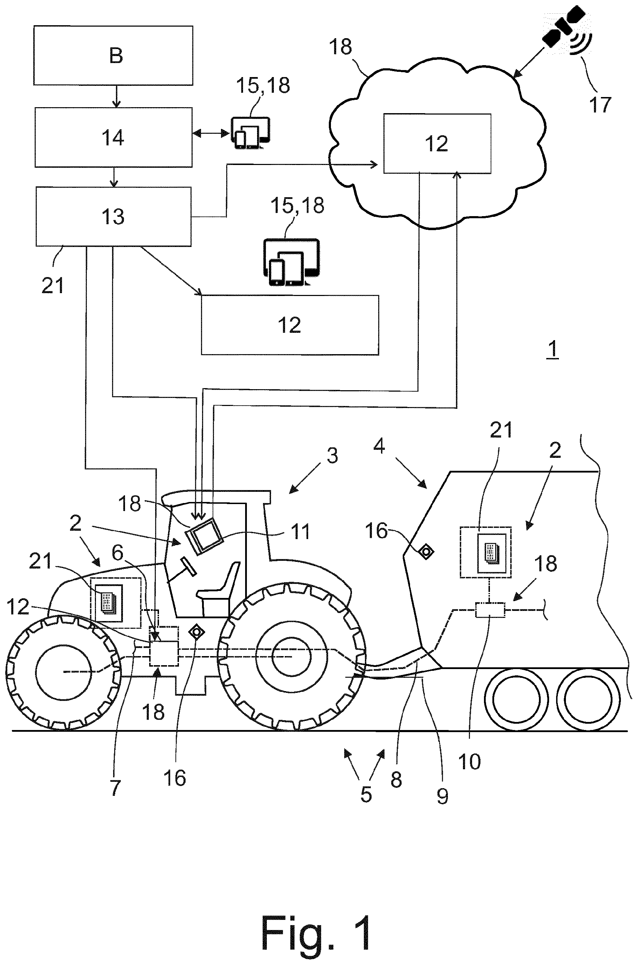

Im Folgenden wird die Erfindung anhand einer lediglich Ausführungsbeispiele darstellenden Zeichnung näher erläutert. In der Zeichnung zeigt
- Fig. 1: eine erste schematische Darstellung eines vorschlagsgemäßen land-wirtschaftlichen Assistenzsystem und

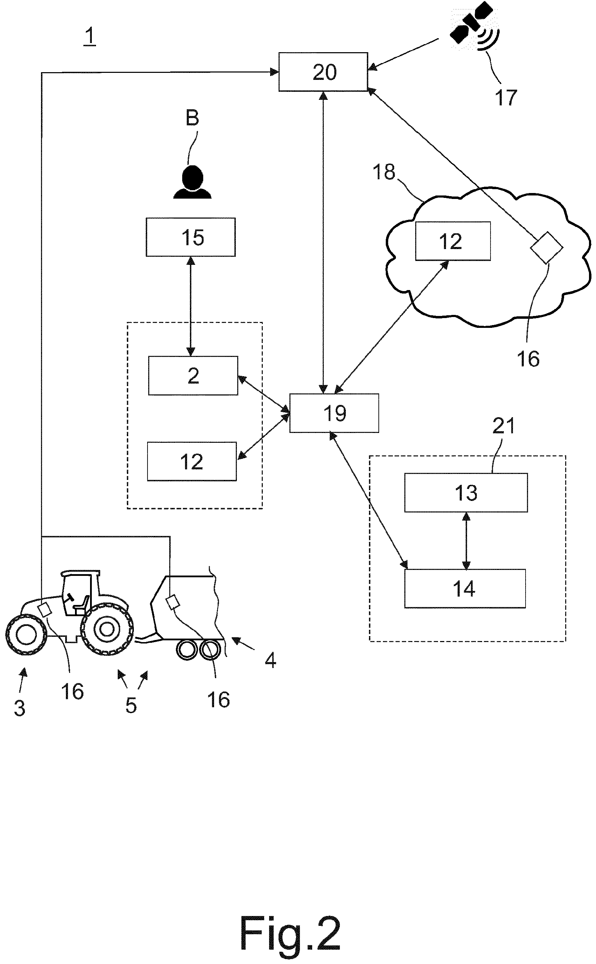

- Fig. 2: eine zweite schematische Darstellung eines vorschlagsgemäßen land-wirtschaftlichen Assistenzsystem.

Das vorschlagsgemäße landwirtschaftliche Assistenzsystem 1 weist ein Fahrerassistenzsystem 2 auf. Das Fahrerassistenzsystem 2 dient der Ansteuerung einer insbesondere als Traktor ausgestalteten Zugmaschine 3 und/oder eines Anbaugeräts 4 eines landwirtschaftlichen Gespanns 5.

Bei dem Anbaugerät 4 kann es sich um jedwedes Anbaugerät 4 handeln, das mit einer Zugmaschine 3 koppelbar ist. Bei dem dargestellten Ausführungsbeispiel handelt es sich bei dem Anbaugerät 4 um eine Ballenpresse, mit der sich Heu, Stroh oder dergleichen zu Ballen pressen lässt.

Die dargestellte Zugmaschine 3 weist eine Maschinensteuerung 6 auf, mit der sich Maschineneinstellungen wie die Motordrehzahl des Zugmaschinenmotors 7, die Drehzahl bzw. das Drehmoment der Zapfwelle 8 der Zugmaschine 3, die Heberhöhe eines Heckkrafthebers 9 oder dergleichen verändern lassen. Der Maschinensteuerung 6 werden die von dem landwirtschaftlichen Assistenzsystem 1 erzeugten Steuerparameter zugeführt.

Hier und vorzugsweise ist auch das Anbaugerät 4 mit einer eigenen Steuerung, hier einer Gerätesteuerung 10, ausgestattet, der die vom landwirtschaftlichen Assistenzsystem 1 erzeugten Steuerparameter zugeführt werden. Diese Zuführung der Steuerparameter kann vollautomatisch oder über einen Bediener B, beispielsweise, indem der Bediener B die Änderung von Steuerparametern über eine Ein-/Ausgabeeinheit 11 freigibt oder über die Ein-/Ausgabeeinheit 11 eingibt, vollzogen werden.

Das in den Figuren dargestellte und insoweit bevorzugte Ausführungsbeispiel betrifft ein landwirtschaftliches Assistenzsystem 1 mit einem Fahrerassistenzsystem 2 zur Ansteuerung einer insbesondere als Traktor ausgestalteten Zugmaschine 3 und/oder eines Anbaugeräts 4 eines landwirtschaftlichen Gespanns 5, wobei das landwirtschaftliche Assistenzsystem 1 Steuerparameter für die Zugmaschine 3, insbesondere für die Maschinensteuerung 6 der Zugmaschine 3, und/oder für das Anbaugerät 4, insbesondere für die Gerätesteuerung 10 des Anbaugerätes 4, erzeugt, wobei das Fahrerassistenzsystem 2 eine Ein-/Ausgabeeinheit 11 für den Dialog mit einem Benutzer B aufweist, wobei das landwirtschaftliche Assistenzsystem 1 einen Regelinterpreter 12 aufweist, der die Steuerparameter erzeugt, indem er Regeln von Regelwerken 13 abarbeitet, wobei das landwirtschaftliche Assistenzsystem 1 einen Regelgenerator 14 aufweist, der eine Mehrzahl von Regelwerken 13 betreffend die Zugmaschine 3 und/oder das Anbaugerät 4 bereitstellt.

Der Begriff "Regelgenerator" ist hier weit zu verstehen. Im einfachsten Fall stellt der Regelgenerator die Regelwerke 13 nur aus einem Speicher zur Verfügung. Die bevorzugte Ausführungsform wird noch erläutert.

Die Ein-/Ausgabeeinheit 11 kann hier und vorzugsweise an der Zugmaschine 3 angeordnet sein. Genauso vorteilhaft kann sie jedoch auch durch ein mobiles Gerät 15 gebildet werden. Das Fahrerassistenzsystem 2 ist, wie dargestellt, hier und vorzugsweise an dem landwirtschaftlichen Gespann 5, insbesondere an der Zugmaschine 4, angeordnet.

Der Regelinterpreter 12 erzeugt die Steuerparameter aus Regelwerken 13, die ganz unterschiedliche Regeln beinhalten können. Diese Regeln können die Zugmaschine 3, das Anbaugerät 4 und/oder das landwirtschaftliche Gespann 5 betreffen. Sie können unterschiedliche Eingangsdaten aus Sensoren 16 und externen Quellen 17 berücksichtigen und unterschiedliche Komplexitäten aufweisen. Zur Verfügung gestellt werden die Regelwerke 13 von dem Regelgenerator 14, der hier und vorzugsweise zumindest eine Datenbank umfasst. Besonders bevorzugt ist, dass der Regelgenerator 14 eine webbasierte Serverplattform ist, auf der Regelwerke 13 von verschiedenen Benutzern B erstellt werden können. Für die Zwecke des vorschlagsgemäßen landwirtschaftlichen Assistenzsystems 1 können die Regelwerke 13 jedoch auch bereits als erstellt betrachtet werden und lediglich zur Verfügung gestellt werden.

Wesentlich ist nun, dass das landwirtschaftliche Assistenzsystem 1 eingerichtet ist, den Regelinterpreter 12 bedarfsweise auf Steuerungshardware 18, die Teil der Zugmaschine 3 und/oder des Anbaugeräts 4 ist, und auf Steuerungshardware 18, die gespannfern angeordnet ist, auszuführen und dass das landwirtschaftliche Assistenzsystem 1 hierfür ein Koordinationsmodul 19 aufweist, das den Regelinterpreter 12 unabhängig von dem Ausführungsort des Regelinterpreters 12 mit dem Regelgenerator 14 und dem Fahrerassistenzsystem 2 koordiniert.

Es ist hier also so, dass der Regelinterpreter 12 im Grunde auf beliebiger Steuerungshardware 18 ausgeführt werden kann. Er kann dabei hier und vorzugsweise jederzeit die Steuerungshardware 18 wechseln, indem der Regelinterpreter 12 verschoben wird oder ein anderer Regelinterpreter 12 gestartet wird, ohne dass das Fahrerassistenzsystem 2 oder der Regelgenerator 14 davon beeinflusst würden. Hier und vorzugsweise ist zumindest de Fahrerassistenzsystem 2 der Ausführungsort des Regelinterpreters 12 nicht bekannt. Das Koordinationsmodul 19 wählt hier und vorzugsweise den Ausführungsort des Regelgenerators 14 nach Bedarf und abhängig von dem abzuarbeitenden Regelwerk 13. Der Begriff "Dialog" bezieht sich entsprechend auf diese Kommunikation mit dem Benutzer B. Ein Dialog beinhaltet zumindest eine Information, wie eine Frage oder Auswahlmöglichkeit, die dem Benutzer B angezeigt wird und eine Benutzereingabe, beispielsweise eine Auswahl, die hier dem Regelinterpreter 12 zurückgemeldet wird.

Bei dem in den Figuren dargestellten und insoweit bevorzugten Ausführungsbeispiel ist ferner vorgesehen, dass der Regelinterpreter 12 bei der Abarbeitung oder Auswahl des Regelwerks 13 dialogbasiert Benutzereingaben berücksichtigt, dass der Regelinterpreter 12 Fragestellungen für einen Benutzer B an das Koordinationsmodul 19 kommuniziert, dass das Fahrerassistenzsystem 2 die Fragestellungen dem Benutzer B zur Beantwortung durch Benutzereingaben vorgibt und die Benutzereingaben mittels des Koordinationsmoduls 19 an den Regelinterpreter 12 kommuniziert und dass der Regelinterpreter 12 die Steuerparameter basierend auf dem Regelwerk 13 und den Benutzereingaben erzeugt.

Es kann somit vorgesehen sein, dass der Regelinterpreter 12 auf Basis des Regelwerks 13 mehrfach unabhängig vom Ausführungsort des Regelinterpreters 12 mit dem Benutzer B kommuniziert.

Weiter ist hier und vorzugsweise vorgesehen, dass das landwirtschaftliche Assistenzsystem 1 einen weiteren Regelinterpreter 12 aufweist, dass das Koordinationsmodul 19 den weiteren Regelinterpreter 12 mit dem Regelgenerator 14 und dem Fahrerassistenzsystem 2 koordiniert, vorzugsweise, dass das landwirtschaftliche Assistenzsystem 1 mindestens einen Regelinterpreter 12 auf einer Steuerungshardware 18 des landwirtschaftlichen Gespanns 5, insbesondere der Zugmaschine 3, ausführt und dass das landwirtschaftliche Assistenzsystem 1 mindestens einen Regelinterpreter 12 auf einer gespannfernen Steuerungshardware 18 ausführt, weiter vorzugsweise, dass die Regelinterpreter 12 sequentiell dialogbasiert über das Koordinationsmodul 19 mit dem Benutzer B kommunizieren und Benutzereingaben erhalten.

Es kann vorgesehen sein, dass ein Regelwerk 13, das hier und vorzugsweise der Zugmaschine 3 zugeordnet ist, auf Steuerungshardware 18 der Zugmaschine 3 gespeichert ist. Es liegt dann nahe, den Regelinterpreter 12 zur Abarbeitung dieses Regelwerks 13 ebenfalls auf Steuerungshardware 18 der Zugmaschine 3 auszuführen. Ein weiteres Regelwerk 13, hier und vorzugsweise zur Optimierung des landwirtschaftlichen Gespanns 5, ist auf gespannferner Steuerungshardware 18 angeordnet. Dabei kann beispielsweise vorgesehen sein, dass die Rechenleistung und Speicherkapazität der gespannfernen Steuerungshardware 18 derjenigen des landwirtschaftlichen Gespanns 5 überlegen ist. Es kann jedoch auch vorkommen, dass das Regelwerk 13 Daten enthält, die nicht verteilt werden sollen und dass der Regelinterpreter 12 deswegen bei dem Regelwerk 13 ausgeführt werden muss.

Darüber hinaus ist hier und vorzugsweise vorgesehen, dass das landwirtschaftliche Assistenzsystem 1 ein Eingangsmodul 20 aufweist, das Eingangsdaten, insbesondere Sensordaten, vorzugsweise von der Zugmaschine 3 und/oder dem Anbaugerät 4 und/oder einer gespannfernen Datenquelle 17, sammelt, dass der jeweilige Regelinterpreter 12 die Regelwerke 13 basierend auf den Eingangsdaten abarbeitet und dass das Koordinationsmodul 19 den jeweiligen Regelinterpreter 12 mit dem Eingangsmodul 20 koordiniert.

Die Eingangsdaten können neben Sensordaten von den Sensoren 16 auch Wetterdaten, Maschinendaten der Zugmaschine 3 und/oder des Anbaugeräts 4 oder dergleichen umfassen. Daher wird auch das Eingangsmodul 20 mit dem Regelinterpreter 12 koordiniert.

Weiterhin ist hier und vorzugsweise vorgesehen, dass der Regelgenerator 14 eine Datenbank 21 mit Regelwerken 13 aufweist, und/oder, dass der Regelgenerator 14 zum Erstellen und/oder Editieren der Regelwerke 13 ausgestaltet ist, vorzugsweise, dass die Regelwerke 13 mittels des Regelgenerators 14 von mehreren Benutzern B, insbesondere browserbasiert, erstellbar und/oder editierbar sind.

Insbesondere die Datenbank 21 muss keine einheitliche Datenbank 21 sein, sondern kann, wie dargestellt, mehrere Datenbanken 21 umfassen. Im einfachsten Fall umfasst der Regelgenerator 14 hier nur diese Datenbank 21. Hier und vorzugsweise basiert der Regelgenerator 14 jedoch auf einer Internet-Plattform, die von mehreren Benutzern B zum Erstellen und/oder Editieren von Regelwerken 13 genutzt wird.

Darüber hinaus ist hier und vorzugsweise vorgesehen, dass das landwirtschaftliche Assistenzsystem 1 das Eingangsmodul 20 und/oder das Koordinationsmodul 19 und/oder den Regelgenerator 14, zumindest teilweise, insbesondere vollständig, auf Steuerungshardware 18, die Teil der Zugmaschine 3 und/oder des Anbaugeräts 4 ist, und/oder auf Steuerungshardware 18, die gespannfern angeordnet ist, ausführt, und/oder, dass das landwirtschaftliche Assistenzsystem 1 das Fahrerassistenzsystem 2, zumindest teilweise, auf Steuerungshardware 18, die Teil der Zugmaschine 3 und/oder des Anbaugeräts 4 ist, ausführt.

Die gespannferne Steuerungshardware 18 kann hier und vorzugsweise ein gepannfernes Smartdevice, insbesondere Smartphone und/oder einen Server umfassen. Die Steuerungshardware 18 des Gespanns 5 kann ein Benutzerterminal der Zugmaschine 3 und/oder des Anbaugeräts 4 und/oder ein ISOBUS-basiertes Benutzerterminal umfassen. Auf all dieser Steuerungshardware 18 kann jeweils oder teilweise ein Regelinterpreter 12 ausgeführt werden. Das Koordinationsmodul 19 sorgt dabei für einen reibungslosen Ablauf in der Koordination der verschiedenen Bestandteile des landwirtschaftlichen Assistenzsystems 1.

### Bezugszeichenliste

- 1: Landwirtschaftliches Assistenzsystem
- 2: Fahrerassistenzsystem
- 3: Zugmaschine
- 4: Anbaugerät
- 5: Landwirtschaftliches Gespann
- 6: Maschinensteuerung
- 7: Zugmaschinenmotor
- 8: Zapfwelle
- 9: Heckkraftheber
- 10: Gerätesteuerung
- 11: Ein-/Ausgabeeinheit
- 12: Regelinterpreter
- 13: Regelwerk
- 14: Regelgenerator
- 15: Mobiles Gerät
- 16: Sensoren
- 17: Externe Quellen
- 18: Steuerungshardware
- 19: Koordinationsmodul
- 20: Eingangsmodul
- 21: Datenbank
- B: Benutzer

## Patentansprüche

1. Landwirtschaftliches Assistenzsystem mit einem Fahrerassistenzsystem zur Ansteuerung einer insbesondere als Traktor ausgestalteten Zugmaschine (3) und/oder eines Anbaugeräts (4) eines landwirtschaftlichen Gespanns (5), wobei das landwirtschaftliche Assistenzsystem (1) Steuerparameter für die Zugmaschine (3), insbesondere für eine Maschinensteuerung (6) der Zugmaschine (3), und/oder für das Anbaugerät (4), insbesondere für eine Gerätesteuerung (10) des Anbaugerätes (4), erzeugt, wobei das Fahrerassistenzsystem (2) eine Ein-/Ausgabeeinheit (11) für den Dialog mit einem Benutzer (B) aufweist,
wobei das landwirtschaftliche Assistenzsystem (1) einen Regelinterpreter (12) aufweist, der die Steuerparameter erzeugt, indem er Regeln von Regelwerken (13) abarbeitet,
wobei das landwirtschaftliche Assistenzsystem (1) einen Regelgenerator (14) aufweist, der eine Mehrzahl von Regelwerken (13) betreffend die Zugmaschine (3) und/oder das Anbaugerät (4) bereitstellt,
**dadurch gekennzeichnet,**
**dass** das landwirtschaftliche Assistenzsystem (1) eingerichtet ist, den Regelinterpreter (12) bedarfsweise auf Steuerungshardware (18), die Teil der Zugmaschine (3) und/oder des Anbaugeräts (4) ist, und auf Steuerungshardware (18), die gespannfern angeordnet ist, auszuführen und dass das landwirtschaftliche Assistenzsystem (1) hierfür ein Koordinationsmodul (19) aufweist, das den Regelinterpreter (12) unabhängig von dem Ausführungsort des Regelinterpreters (12) mit dem Regelgenerator (14) und dem Fahrerassistenzsystem (2) koordiniert.

2. Landwirtschaftliches Assistenzsystem nach Anspruch 1, **dadurch gekennzeichnet, dass** der Regelinterpreter (12) bei der Abarbeitung oder Auswahl des Regelwerks (13) dialogbasiert Benutzereingaben berücksichtigt, dass der Regelinterpreter (12) Fragestellungen für einen Benutzer (B) an das Koordinationsmodul (19) kommuniziert, dass das Fahrerassistenzsystem (2) die Fragestellungen dem Benutzer (B) zur Beantwortung durch Benutzereingaben vorgibt und die Benutzereingaben mittels des Koordinationsmoduls (19) an den Regelinterpreter (12) kommuniziert und dass der Regelinterpreter (12) die Steuerparameter basierend auf dem Regelwerk (13) und den Benutzereingaben erzeugt.

3. Landwirtschaftliches Assistenzsystem nach Anspruch 1 oder 2, **dadurch gekennzeichnet, dass** das landwirtschaftliche Assistenzsystem (1) einen weiteren Regelinterpreter (12) aufweist, dass das Koordinationsmodul (19) den weiteren Regelinterpreter (12) mit dem Regelgenerator (14) und dem Fahrerassistenzsystem (2) koordiniert, vorzugsweise dass das landwirtschaftliche Assistenzsystem (1) mindestens einen Regelinterpreter (12) auf einer Steuerungshardware (18) des landwirtschaftlichen Gespanns (5), insbesondere der Zugmaschine (3), ausführt und dass das landwirtschaftliche Assistenzsystem (1) mindestens einen Regelinterpreter (12) auf einer gespannfernen Steuerungshardware (18) ausführt, weiter vorzugsweise, dass die Regelinterpreter (12) sequentiell dialogbasiert über das Koordinationsmodul (19) mit dem Benutzer (B) kommunizieren und Benutzereingaben erhalten.

4. Landwirtschaftliches Assistenzsystem nach einem der vorhergehenden Ansprüche, **dadurch gekennzeichnet, dass** das landwirtschaftliche Assistenzsystem (1) ein Eingangsmodul (20) aufweist, das Eingangsdaten, insbesondere Sensordaten, vorzugsweise von der Zugmaschine (3) und/oder dem Anbaugerät (4) und/oder einer gespannfernen Datenquelle (17), sammelt, dass der jeweilige Regelinterpreter (12) die Regelwerke (13) basierend auf den Eingangsdaten abarbeitet und dass das Koordinationsmodul (19) den jeweiligen Regelinterpreter (12) mit dem Eingangsmodul (20) koordiniert.

5. Landwirtschaftliches Assistenzsystem nach einem der vorhergehenden Ansprüche, **dadurch gekennzeichnet, dass** der Regelgenerator (14) eine Datenbank (21) mit Regelwerken (13) aufweist, und/oder, dass der Regelgenerator (14) zum Erstellen und/oder Editieren der Regelwerke (13) ausgestaltet ist, vorzugsweise, dass die Regelwerke (13) mittels des Regelgenerators (14) von mehreren Benutzern (B), insbesondere browserbasiert, erstellbar und/oder editierbar sind.

6. Landwirtschaftliches Assistenzsystem nach einem der vorhergehenden Ansprüche, **dadurch gekennzeichnet, dass** das landwirtschaftliche Assistenzsystem (1) das Eingangsmodul (20) und/oder das Koordinationsmodul (19) und/oder den Regelgenerator (14), zumindest teilweise, insbesondere vollständig, auf Steuerungshardware (18), die Teil der Zugmaschine (3) und/oder des Anbaugeräts ist (4), und/oder auf Steuerungshardware (18), die gespannfern angeordnet ist, ausführt, und/oder, dass das landwirtschaftliche Assistenzsystem (1) das Fahrerassistenzsystem (2), zumindest teilweise, auf Steuerungshardware (18), die Teil der Zugmaschine (3) und/oder des Anbaugeräts (4) ist, ausführt.

## Claims

1. An agricultural assistance system with a driver assistance system for controlling a towing vehicle (3), in particular configured as a tractor, and/or a mounted implement (4) for an agricultural vehicle and trailer combination (5), wherein the agricultural assistance system (1) produces control parameters for the towing vehicle (3), in particular for a machine controller (6) of the towing vehicle (3) and/or for the mounted implement (4), in particular for an implement controller (10) of the mounted implement (4), wherein the driver assistance system (2) has an input/output unit (11) for dialogue with a user (B),
wherein the agricultural assistance system (1) has a rule interpreter (12) which produces the control parameters by executing rules from sets of rules (13),
wherein the agricultural assistance system (1) has a rule generator (14) which provides a plurality of sets of rules (13) pertaining to the towing vehicle (3) and/or the mounted implement (4),
**characterized in that**
the agricultural assistance system (1) is configured to implement the rule interpreter (12) as required on control hardware (18) which is part of the towing vehicle (3) and/or of the mounted implement (4), and on control hardware (18) which is disposed remotely from the vehicle and trailer combination, and **in that** for this purpose, the agricultural assistance system (1) has a coordination module (19) which coordinates the rule interpreter (12) with the rule generator (14) and the driver assistance system (2) independently of the location of the implementation of the rule interpreter (12).

2. The agricultural assistance system according to claim 1, **characterized in that** during the execution or selection of the set of rules (13), the rule interpreter (12) takes dialogue-based user inputs into account, **in that** the rule interpreter (12) communicates questions for a user (B) to the coordination module (19), **in that** the driver assistance system (2) specifies the questions to the user (B) for answering by means of user inputs and communicates the user inputs to the rule interpreter (12) by means of the coordination module (19) and **in that** the rule interpreter (12) produces the control parameters on the basis of the set of rules (13) and the user inputs.

3. The agricultural assistance system according to claim 1 or claim 2, **characterized in that** the agricultural assistance system (1) has a further rule interpreter (12), **in that** the coordination module (19) coordinates the further rule interpreter (12) with the rule generator (14) and the driver assistance system (2), preferably **in that** the agricultural assistance system (1) implements at least one rule interpreter (12) on an item of control hardware (18) of the agricultural vehicle and trailer combination (5), in particular the towing vehicle (3), and **in that** the agricultural assistance system (1) implements at least one rule interpreter (12) on an item of control hardware (18) which is remote from the vehicle and trailer combination, more preferably **in that** the rule interpreters (12) communicate sequentially with the user (B) on a dialogue basis via the coordination module (19) and receive user inputs.

4. The agricultural assistance system according to one of the preceding claims, **characterized in that** the agricultural assistance system (1) has an input module (20) which collects input data, in particular sensor data, preferably from the towing vehicle (3) and/or from the mounted implement (4) and/or from a data source (17) which is remote from the vehicle and trailer combination, **in that** the respective rule interpreter (12) executes the sets of rules (13) on the basis of the input data and **in that** the coordination module (19) coordinates the respective rule interpreter (12) with the input module (20).

5. The agricultural assistance system according to one of the preceding claims, **characterized in that** the rule generator (14) has a database (21) with sets of rules (13), and/or **in that** the rule generator (14) is equipped to generate and/or edit the sets of rules (13), preferably **in that** the sets of rules (13) can be generated and/or edited by means of the rule generator (14) by a plurality of users (B), in particular based on a browser.

6. The agricultural assistance system according to one of the preceding claims, **characterized in that** the agricultural assistance system (1) implements the input module (20) and/or the coordination module (19) and/or the rule generator (14) at least partially, in particular completely, on control hardware (18) which is part of the towing vehicle (3) and/or the mounted implement (4), and/or on control hardware (18) which is disposed remotely from the vehicle and trailer combination, and/or **in that** the agricultural assistance system (1) at least partially implements the driver assistance system (2) on control hardware (18) which is part of the towing vehicle (3) and/or the mounted implement (4).

## Revendications

1. Système d'assistance agricole comprenant un système d'assistance à la conduite pour agir sur une machine de traction (3) conformée en particulier en tracteur et/ou sur un outil rapporté (4) d'un attelage agricole (5), le système d'assistance agricole (1) générant des paramètres de commande pour la machine de traction (3), en particulier pour une commande de machine (6) de la machine de traction (3), et/ou pour l'outil rapporté (4), en particulier pour une commande d'outil (10) de l'outil rapporté (4), le système d'assistance à la conduite (2) comportant une unité d'entrée/sortie (11) pour le dialogue avec un utilisateur (B),
le système d'assistance agricole (1) comportant un interpréteur de règles (12) qui génère les paramètres de commande par le fait qu'il exécute des règles de bases de règles (13),
le système d'assistance agricole (1) comportant un générateur de règles (14) qui fournit une pluralité de bases de règles (13) relatives à la machine de traction (3) et/ou à l'outil rapporté (4),
**caractérisé en ce que**
le système d'assistance agricole (1) est agencé pour exécuter l'interpréteur de règles (12), selon les besoins, sur le matériel de commande (18) qui fait partie de la machine de traction (3) et/ou de l'outil rapporté (4) et sur le matériel de commande (18) qui est disposé à distance de l'attelage, et **en ce que** le système d'assistance agricole (1) comporte à cet effet un module de coordination (19) qui coordonne l'interpréteur de règles (12) avec le générateur de règles (14) et avec le système d'assistance à la conduite (2) indépendamment du lieu d'exécution de l'interpréteur de règles (12).

2. Système d'assistance agricole selon la revendication 1, **caractérisé en ce que**, lors de l'exécution ou de la sélection de la base de règles (13), l'interpréteur de règles (12) prend en compte des entrées utilisateur basées dialogue, **en ce que** l'interpréteur de règles (12) communique à un module de coordination (19) des questions pour l'utilisateur (B), **en ce que** le système d'assistance à la conduite (2) soumet les questions à l'utilisateur (B) en vue d'une réponse par l'intermédiaire d'entrées utilisateur et communique les entrées utilisateur à l'interpréteur de règles (12) au moyen du module de coordination (19), et **en ce que** l'interpréteur de règles (12) génère les paramètres de commande en se basant sur la base de règles (13) et sur les entrées utilisateur.

3. Système d'assistance agricole selon la revendication 1 ou 2, **caractérisé en ce que** le système d'assistance agricole (1) comporte un autre interpréteur de règles (12), **en ce que** le module de coordination (19) coordonne l'autre interpréteur de règles (12) avec le générateur de règles (14) et avec le système d'assistance à la conduite (2), de préférence **en ce que** le système d'assistance agricole (1) exécute au moins un interpréteur de règles (12) sur un matériel de commande (18) de l'attelage agricole (5), en particulier de la machine de traction (3), et **en ce que** le système d'assistance agricole (1) exécute au moins un interpréteur de règles (12) sur un matériel de commande à distance de l'attelage (18), plus préférentiellement **en ce que** les interpréteurs de règles (12) communiquent avec l'utilisateur (B) et reçoivent des entrées utilisateur par l'intermédiaire du module de coordination (19) de manière séquentielle, basée dialogue.

4. Système d'assistance agricole selon une des revendications précédentes, **caractérisé en ce que** le système d'assistance agricole (1) comporte un module d'entrée (20) qui recueille des données d'entrée, en particulier des données de capteur, de préférence de la machine de traction (3) et/ou de l'outil rapporté (4) et/ou d'une source de données distante de l'attelage (17), **en ce que** l'interpréteur de règles respectif (12) exécute les bases de règles (13) en se basant sur les données d'entrée, et **en ce que** le module de coordination (19) coordonne l'interpréteur de règles respectif (12) avec le module d'entrée (20).

5. Système d'assistance agricole selon une des revendications précédentes, **caractérisé en ce que** le générateur de règles (14) comporte une banque de données (21) avec des bases de règles (13), et/ou **en ce que** le générateur de règles (14) est conçu pour créer et/ou éditer les bases de règles (13), de préférence **en ce que** les bases de règles (13) peuvent être créées et/ou éditées au moyen du générateur de règles (14) par plusieurs utilisateurs (B), en particulier sur la base d'un navigateur.

6. Système d'assistance agricole selon une des revendications précédentes, **caractérisé en ce que** le système d'assistance agricole (1) exécute le module d'entrée (20) et/ou le module de coordination (19) et/ou le générateur de règles (14), au moins en partie, en particulier entièrement, sur un matériel de commande (18) qui fait partie de la machine de traction (3) et/ou de l'outil rapporté (4) et/ou sur un matériel de commande (18) qui est disposé à distance de l'attelage, et/ou **en ce que** le système d'assistance agricole (1) exécute le système d'assistance à la conduite (2), au moins en partie, sur un matériel de commande (18) qui fait partie de la machine de traction (3) et/ou de l'outil rapporté (4).
